# FASCICULE DE BREVET EUROPEEN

(11) **EP 0 994 568 B1**
(45) Date de publication et mention de la délivrance du brevet: **20.09.2006**
(21) Numéro de dépôt: 99402293.7
(22) Date de dépôt: 20.09.1999
(51) Int. Cl.: H04B 1/48, H04B 1/40, H04B 1/38

(54) **Emetteur-récepteur bibande à double dispositif de rayonnement**
Doppelband Sender-Empfänger mit zwei Antennen
Dual band transceiver with two antennas

(30) Priorité: 23.09.1998 FR 9812062
(43) Date de publication de la demande: 19.04.2000
(73) Titulaire: Sagem SA, 75015 Paris (FR)
(72) Inventeur: Romao, Fernando, Dom. Cab. Christian Schmit et As., 95000 Cergy (FR); Ramsi, Karim. Dom. cab. Christian Schmit et Asoc, 95000 Cergy (FR); Recouly, Marc. Dom cab. Christian Schmit et Asoc, 95000 Cergy (FR)
(74) Mandataire: Schmit, Christian Norbert Marie

(56) Documents cités:
- EP-A- 0 823 790
- DE-C- 19 704 151
- US-A- 5 809 405

## Description

La présente invention a pour objet un émetteur-récepteur bibande à double dispositif de rayonnement. Elle trouve plus particulièrement son application dans le domaine de la téléphonie mobile. Dans ce domaine, les émetteurs récepteurs concernés sont tout simplement des téléphones mobiles qui sont émetteurs, récepteurs et qui sont bibandes, au moins, parce qu'ils sont capables de s'adapter à une norme ou à une autre (voire à une troisième et à une quatrième). Les normes concernées sont plus particulièrement la norme dite GSM, où les émissions-réceptions se font dans la bande des 900 MHz, la norme DCS, où les émissions-réceptions se font dans la bande des 1800MHz, la norme PCS où elles se font dans la bande des 1900MHz, ou encore la norme UMTS où elles se font dans la bande des 2200MHz.

Pour de tels appareils, l'invention est essentiellement utile lorsqu'ils sont munis de deux moyens de rayonnement. A cet effet, on connaît comme premier moyen de rayonnement l'antenne d'un téléphone mobile. Cependant, ces téléphones mobiles sont la plupart du temps munis dans leur embase d'un connecteur susceptible de faire diffuser les émissions (et aussi de servir pour la réception) en étant raccordé à un autre aérien que celui du téléphone mobile, par exemple à celui d'un véhicule dans lequel se trouve ce téléphone mobile.

Les problèmes rencontrés dans ce type d'équipement se situent principalement dans un commutateur d'antenne permettant de diffuser la puissance rayonnée en émission soit dans l'antenne propre au téléphone mobile soit, par l'intermédiaire du connecteur d'embase de ce téléphone mobile, dans un aérien extérieur. En effet, ces commutateurs d'antenne sont réalisés à l'aide de circuits intégrés et notamment de circuits à transistors de type MOS. Ces transistors MOS selon qu'ils sont passants ou bloqués laissent passer la puissance à diffuser vers un aérien ou un autre.

Il apparaît par ailleurs que les puissances à dissiper varient d'une norme à une autre. En effet, ces puissances sont liées aux conditions de propagation, selon les gammes de fréquence. Ainsi il est admis que, dans la norme GSM, on puisse émettre jusqu'à deux watts d'énergie radioélectrique. Par contre dans les normes DCS et PCS ainsi que UMTS la norme limite à un watt la puissance d'émission.

Autant le passage d'une puissance de un watt à travers les transistors constituant les commutateurs de sortie ne présente pas particulièrement de difficulté, autant il apparaît qu'une puissance de deux watts est supérieure une puissance limite de fonctionnement linéaire des transistors de commutation actuellement disponibles. Ces transistors de commutation fonctionnent alors dans une zone non linéaire. Plus exactement, la commutation conduit à un fonctionnement de ces transistors en classe B. Dans ces conditions ces transistors distordent les signaux émis, ce qui a comme principale conséquence l'émission d'un harmonique deux de la fréquence fondamentale d'émission.

Un tel harmonique deux présente un premier inconvénient : celui de dispenser de la puissance inutilement puisqu'elle ne sera pas captée. Il présente par ailleurs un deuxième inconvénient beaucoup plus gênant : celui de constituer une source de parasites incontrôlables dans les bandes de fréquences supérieures à celle du signal de base. En pratique, on considère qu'un commutateur de sortie de type GSM-DCS constitue une source de bruit gênante pour les réseaux de type DCS, PCS ou UMTS. Bien entendu le même phénomène de distorsion se produit pour ces derniers réseaux, lorsque le commutateur de sortie autorise des émissions selon ces demières normes. Mais le problème est alors moins gênant, d'une part parce que la puissance émise est alors plus faible, et d'autre part parce qu'il n'y a pas, au jour d'aujourd'hui, d'utilisateurs à des fréquences doubles des fréquences nominales de ces trois dernières gammes.

Une solution, simpliste, pour résoudre ce problème pourrait consister à mettre en place un filtre en sortie de commutateur, le but de ce filtre serait d'amortir les harmoniques deux émises dans une gamme. La présence d'un tel filtre serait malheureusement inacceptable car elle atténuerait ipso facto les émissions et réceptions dans les trois autres gammes. Autrement, il pourrait être envisagé de rendre ce filtre lui-même commutable. Mais ceci ramènerai au problème précédent, où le commutateur de ce filtre lui-même induirait des parasites par distorsion dont on ne saurait se défaire.

Dans la téléphonie de type GSM, DCS, PCS ou autre, les appareils utilisés ne sont pas duplex. Dans la réalité ils sont soit émetteurs soit récepteurs en alternance. Il existe plusieurs systèmes de transmission : le système dit TDMA (Time Division Multiple Access), le système dit FDMA (Frequency Division Multiple Access), le système dit CDMA (Coded Division Multiple Access) ou des systèmes mixtes à partir de ces trois systèmes. Le système TDMA procède par partage du temps, les deux autres systèmes procédant par partage d'un plan de fréquence ou d'un système de codage. Mais dans ces trois systèmes les appareils sont soit en émission soit en réception : pas les deux en même temps. Il existe donc un alternat automatique géré par un microprocesseur du téléphone mobile, en correspondance d'instructions qui lui sont données par une station de base et en respectant un protocole voulu. Selon ce protocole, des phases d'émission suivent des phases de réception altemativement, que ces phases soient continues dans le temps ou sporadiques. La fonction de duplexeur ainsi réalisée est alors elle aussi réalisée sous la forme d'un commutateur d'alternat.

Dans les appareils bibandes (notamment GSM-DCS), il y a enfin un troisième type de commutation : un commutateur de bande ou commutateur de mode pour passer d'une norme à l'autre.

Il n'est pas connu de fonction globale de commutation. Compte tenu de la complexité des trois types de commutation en cascade, commutateur d'antenne, commutateur d'alternat, et commutateur de mode, on a découvert dans l'invention qu'il était bien plus simple de placer le commutateur d'antenne en aval de l'ensemble. Le nombre de transistors utilisés pour le commutateur global est alors réduit à son minimum, ce qui conduit à un taux d'harmonique deux le plus faible possible.

Dans ces conditions l'invention a pour objet un circuit d'émission réception caractérisé en ce qu'il comporte
- un premier couple de voies de réception, accordées respectivement à une fréquence f0 et à une fréquence f1, différente de f0, et reliées à deux entrées d'un premier diplexeur,
- un deuxième couple de voies d'émission, accordées respectivement à la fréquence f0 et à la fréquence f1, et reliées à deux entrées d'un deuxième diplexeur,
- un premier et un deuxième circuit de rayonnement,
- et un commutateur relié en entrée aux sorties des deux diplexeurs et en sortie aux deux circuits de rayonnement, pour recevoir ces deux voies et commuter une voie d'émission et une voie de réception accordées à une même fréquence sur un des circuits de rayonnement.

Par ailleurs dans les phases d'émission, qui sont les plus critiques du point de vue de l'émission de l'harmonique deux, pour éviter la propagation d'un tel harmonique deux, notamment dans le cas d'une utilisation de type GSM (pour ne pas parasiter les bandes DCS, PCS et UMTS), dans l'invention on prévoit de réaliser un filtre non commuté. Dans l'invention les composants de ce filtre non commuté se trouvent situés pour partie après et pour partie avant le commutateur de mode. Dans une variante préférée ces composants sont placés de part et d'autre du commutateur général. Dans ces conditions, la partie d'impédance réactive située après le commutateur se combine avec une autre partie d'impédance réactive située avant ce commutateur sur une voie d'émission pour atténuer l'harmonique deux.

Lorsque l'utilisation est commutée sur un autre mode, le signal émis ne voit plus sur son chemin qu'une seule de ces deux parties d'impédance réactive, celle qui est située après le commutateur de mode. En effet, dans la transmission sur cette autre voie, une autre impédance réactive n'est pas présente, ou a une valeur différente. Dans ces conditions cet autre signal n'est pas amorti, et peut se propager librement. C'était le but à atteindre.

L'invention a donc également pour objet un circuit d'émission comportant une voie d'émission pour une porteuse à une fréquence f0, une voie d'émission pour une porteuse à une fréquence f1 différente de f0, un circuit de rayonnement, et un commutateur pour recevoir ces deux voies d'émission et commuter une de ces deux voies d'émission sur le circuit de rayonnement, caractérisé en ce qu'il comporte un premier élément de filtre situé entre le commutateur et le circuit de rayonnement, ce premier élément de filtre étant accordé avec un deuxième élément de filtre situé dans la voie d'émission à la fréquence f0 pour empêcher la transmission, par cette voie d'émission à la fréquence f0, de composantes fréquentielles à la fréquence f1.

L'invention sera mieux comprise à la lecture de la description qui suit à l'examen de la figure qui l'accompagne. Celles-ci ne sont présentées qu'à titre indicatif et nullement limitatif de l'invention.

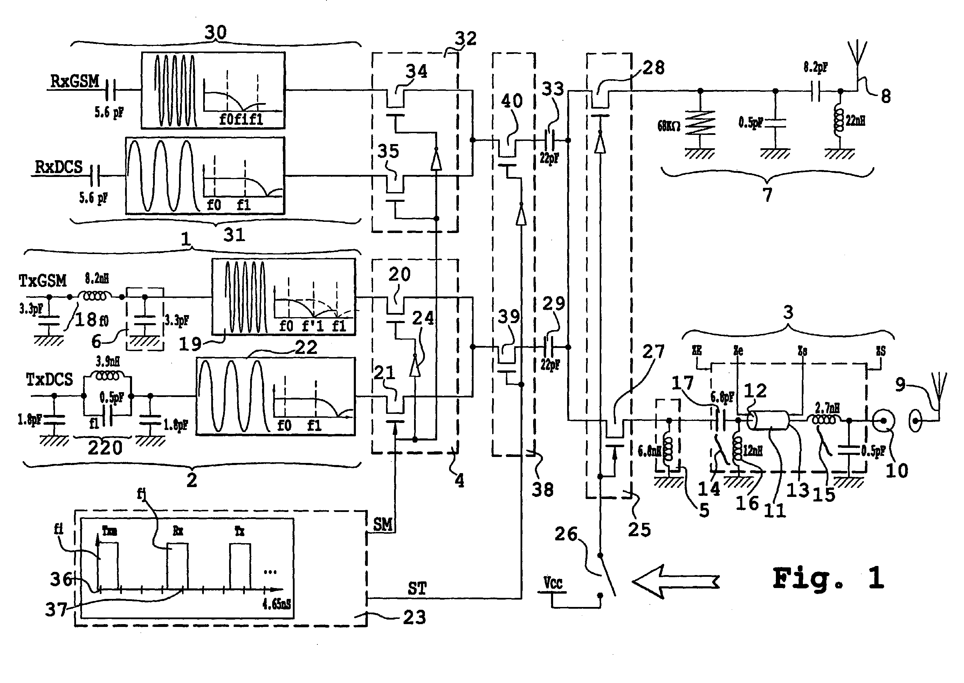

La figure 1 montre un circuit d'émission, aussi utilisable en émission réception, et comportant les moyens de l'invention.

La figure 1 montre, selon l'invention, un circuit d'émission comportant une première voie d'émission 1 pour émettre un signal à une fréquence porteuse f0 et une deuxième voie d'émission 2 pour émettre un signal à une fréquence porteuse f1. La figure 1 montre également un circuit de rayonnement 3 et un commutateur 4 pour recevoir en entrée les deux voies d'émission et pour commuter une de ces deux voies d'émission sur le circuit de rayonnement 3. Le commutateur 4 est un commutateur de mode, dit aussi diplexeur. Un premier mode permet l'émission d'une porteuse f0 selon la norme GSM. Un deuxième mode permet l'émission d'une porteuse f1 selon la norme DCS (ou PCS ou UMTS) telle que f1 soit de l'ordre du double de f0.

L'invention est plus particulièrement caractérisée en ce qu'un premier élément de filtre 5 est située en cascade entre le commutateur 4 et le circuit de rayonnement 3. L'élément de filtre 5 est accordé avec un deuxième élément de filtre 6. L'élément de filtre 6 est situé dans la voie d'émission 1 à la fréquence f0, en amont du commutateur 4. L'accord des éléments 5 et 6 est réglé pour empêcher la transmission par la voie 1 de composantes fréquentielles à la fréquence f1 : la fréquence de porteuse de la voie d'émission 2.

Le fonctionnement de ce circuit est le suivant. Lorsque le commutateur 4 sélectionne la voie 1 pour la mettre en relation avec le circuit de rayonnement 3, les éléments 5 et 6 en cascade interviennent dans un filtre pour empêcher des émissions par le dispositif de rayonnement 3 de composante à la fréquence f1. Lorsque le commutateur 4 met en service la voie d'émission 2, l'élément de filtre 5 coopère avec des éléments de filtre de cette voie 2, mais qui sont désaccordés de ce point de vue, et qui n'empêchent pas la transmission, par la voie 2 sur le circuit de rayonnement 3 de composantes fréquentielles à la fréquence f1.

La figure 1 montre plusieurs circuits rayonnants : les circuits 3 et 7. Dans un exemple le circuit 7 est le circuit normal d'antenne d'un téléphone mobile avec une antenne 8. Dans ce même exemple, le circuit rayonnant 3 comporte un aérien 9 d'un véhicule qui vient se connecter sur un connecteur d'embase 10 du téléphone mobile. Un téléphone mobile possède une certaine longueur. En général cette longueur est de l'ordre de 15 centimètres. Pour des raisons de blindage, les circuits d'émission, notamment un amplificateur de puissance de sortie, sont situés près de l'aérien normal 8 du téléphone mobile. Comme cet aérien 8 se trouve généralement vers le haut du téléphone mobile, il faut conduire le signal émis jusqu'au connecteur 10 de l'embase. Ceci est réalisé à l'intérieur du téléphone mobile par un élément 11 de câble coaxial d'une longueur du même ordre que la longueur du téléphone mobile.

Pour des raisons d'adaptation d'impédances, on peut munir l'entrée 12 et la sortie 13 de ce câble coaxial 11 de circuits d'adaptation d'impédance pour éviter des réflexions dans l'aérien 9. Par exemple un circuit 14 en entrée, et un circuit 15 en sortie permettent de faire en sorte que les impédances Ze à l'entrée et Zs en sortie soient adaptées à des impédances ZE et ZS en entrée et en sortie du circuit de rayonnement 3. Pour des raisons pratiques, notamment pour que Ze et Zs soient adaptés à 50 Ohms, les circuits 14 et 15 comportent chacun, dans un exemple, un condensateur et une inductance montés comme montré sur la figure 1 avec les valeurs qui y sont indiquées.

Dans l'exemple représenté, le premier élément de filtre 5 est une inductance en parallèle entre la sortie du commutateur 4 et la masse. Elle est destinée à résonner avec un condensateur 6 monté en parallèle entre l'entrée du commutateur 4 et la masse. Cette résonance empêche la transmission de composantes fréquentielles à la fréquence f1. Bien entendu, d'une part l'inductance 5 et le condensateur 6 montés en parallèle pourraient être des composants différents, montés différemment, tout en ayant un même but de réjection. D'autre part, les impédances d'adaptation des circuits 14 et 15, cette dernière étant ramenée à l'entrée 12 du câble coaxial 11, peuvent contribuer avec l'impédance 5 à définir la fréquence de réjection souhaitée. Les valeurs indiquées pour les circuits 14 et 15 sont des valeurs d'adaptation large bande : leur effet est ici cantonné à l'adaptation large bande du câble coaxial 11. Néanmoins il serait possible de modifier un des éléments du circuit 14, par exemple une inductance 16 ou un condensateur 17, pour que celui-ci contribue, à la place ou en complément de l'impédance réactive 5, et en coopération avec l'impédance réactive 6, à provoquer la réjection souhaitée.

De même, le condensateur 6 participe également à un filtre d'entrée 18, situé dans la voie d'émission 1, à la sortie d'un amplificateur de puissance (non représenté). De ce fait le deuxième élément de filtre avec lequel s'accorde le premier élément de filtre 5 peut aussi comporter plusieurs composants réactifs.

Un filtre monté en sortie d'amplificateur de puissance, dans la voie d'émission à la fréquence f0 ne doit pas être capable de laisser passer des composantes à la fréquence f1. Indépendamment du problème de commutation, ce filtre est la plupart du temps réalisé sous la forme d'un filtre 19 à onde de surface. Ce filtre 19 est en conséquence symboliquement représenté par un ensemble de méandres dont la réalisation sur un circuit imprimé a pour effet, dans le cas d'un filtre réjecteur, d'empêcher la propagation, par l'intermédiaire d'une onde de surface inverse, d'une composante indésirable. Ici par exemple la composante indésirable est une composante à une fréquence f1. Pour cette raison la bande passante du filtre 19 est montrée avec une fréquence de réjection à la fréquence f1.

Normalement le filtre 19 évite donc la propagation des modes indésirables à la fréquence f1 de l'ordre du double de f0. Selon l'invention, l'élément de filtre 5 doit coopérer avec l'élément 6, notamment à la fréquence f1, pour constituer un filtre réjecteur à la fréquence f1. Dans ces conditions, la fréquence de réjection du filtre 19 est de préférence décalée, à une fréquence intermédiaire f'1 entre la fréquence f0 et la fréquence f1. De cette manière, le phénomène de coopération des éléments réactifs 5 et 6 peut se produire. Dans un exemple le filtre 19 réalisé aura ainsi une fréquence de réjection f1' qui vaut de l'ordre de 1,4 fois f0. En agissant ainsi, le filtre 19 sera éventuellement moins réjecteur pour les composantes à f1 puisqu'il est essentiellement calculé pour les composantes à f1'. Par contre il laissera passer les ondes à la fréquence f1 pour que les éléments de filtre 6 (ou 18) puissent coopérer avec l'élément de filtre 5 (ou 14, 15).

Le commutateur 4 est réalisé sous la forme de deux interrupteurs en parallèle. Un interrupteur comporte un premier transistor 20 (ou un équivalent) pour autoriser la transmission des signaux disponibles dans la voie d'émission 1. La représentation montre, pour cet interrupteur, schématiquement, un transistor 20 de type N recevant un signal de commande sur sa grille. En réalité cet interrupteur 20 est réalisé avec un transistor N et un transistor P, en parallèle l'un de l'autre, et recevant des signaux complémentaires sur leurs grilles pour autoriser la transmission de signaux analogiques alternatifs. Le commutateur 4 comporte par ailleurs un deuxième transistor 21 (ou un équivalent) pour autoriser la transmission des signaux émis dans la voie d'émission 2.

La voie d'émission 2 comporte quant à elle un filtre 22, analogue au filtre 19, pour lequel la fréquence de réjection est située au-delà de la fréquence f1. En effet, le filtre 22 est sensé laisser passer les signaux à cette fréquence f1 mais doit arrêter les signaux à fréquence double de f1 et au-dessus. Le filtre 22 à onde de surface comporte en amont des éléments réactifs 220 analogues aux éléments 6 et 18. Ces éléments réactifs sont destinés à se combiner à l'impédance 5 pour contribuer à laisser passer efficacement les composantes à la fréquence f1.

Les transistors 20 et 21 sont commandés par un signal de mode SM produit par un circuit de commande 23 dont on verra le fonctionnement plus loin. Le signal de commande des transistors 20 et 21 subit une inversion entre la commande de transistor 20 et la commande du transistor 21 par l'intermédiaire d'un inverseur 24 notamment. De ce fait avec un seul signal on rend passante soit la voie d'émission 1 soit la voie d'émission 2.

La voie rendue passante est ensuite de préférence reliée à un circuit de sélection 25 avant d'être mise en relation avec le circuit rayonnant 3 ou le circuit rayonnant 7. Le circuit de sélection 25 est donc un commutateur d'antenne. Il a pour objet de choisir un circuit rayonnant correspondant à une utilisation plutôt qu'à une autre. D'une manière connue, la connexion de l'aérien 9 dans le connecteur 10 provoquera la fermeture, ou l'ouverture, d'un interrupteur 26 permettant de changer la polarité d'un signal de sélection appliqué à des transistors interrupteurs 27 et 28 (ou équivalent) du circuit de sélection 25. Le signal de sélection subit lui aussi une inversion entre la commande du transistor 27 et celle du transistor 28. Le simple fait de provoquer la connexion actionne ainsi un détecteur de fin de course. Dans ces conditions, à travers le commutateur 4 et le commutateur 25, une voie d'émission est reliée au circuit 3 ou au circuit 7. Compte tenu des problèmes de polarisation qui peuvent survenir en différents endroits du circuit, le commutateur 4 sera relié au circuit 25 par l'intermédiaire d'un condensateur de découplage 29.

Pour faire le pendant des voies d'émission 1 et 2, en relation avec des circuits rayonnants 3 ou 7, un émetteur récepteur selon l'invention comporte également deux voies de réception 30 et 31 accordées sur f0 et f1 respectivement. Dans un exemple la voie 30 à f0 est une voie de réception à la norme GSM alors que la voie 31 est une voie de réception à la norme DCS. La mise en relation de l'une ou l'autre de ces voies avec l'un ou l'autre des circuits d'émission 3 et 7 s'effectue à travers un commutateur 32, jouant lui aussi un rôle de diplexeur et ayant une fonction identique à celle du commutateur 4. Le commutateur 32 possède deux entrées et une sortie. Une entrée est reliée à la voie 30, l'autre à la voie 31. La sortie du commutateur 32 est reliée à l'entrée unique du commutateur 25 par l'intermédiaire d'un condensateur de découplage 33. Comme le commutateur 4, le commutateur 32 comporte deux transistors interrupteurs 34 et 35 en cascade respectivement avec l'une des voies 30 et 31 et avec le condensateur 33 d'autre part. Ces transistors 34 et 35 (ou équivalent) sont aussi commandés par le signal de commande SM issu du circuit de commande 23.

Le circuit de commande 23 est capable de tenir compte d'indications imposées par un utilisateur sur le clavier du téléphone mobile, ou par un circuit amovible inséré dans ce dernier, pour le commuter d'un mode selon une norme à un mode selon une autre norme. Le signal de commande émis à cette fin par le circuit 23 commande donc en conséquence simultanément le commutateur 4 et le commutateur 32.

Comme cela a été indiqué précédemment, quels que soient les modes de fonctionnement retenus (TDMA, FDMA, CDMA ou mixtes) les téléphones mobiles ne sont pas de véritables appareils duplex mais fonctionnent plutôt avec un altemat automatique. On a représenté dans le circuit de commande 23, dans le cadre de l'utilisation de type TDMA, une répartition de fenêtres temporelles 36 et 37 respectivement en émission et en réception. Selon la norme GSM, des fenêtres temporelles de 577 microsecondes chacune doivent être séparées par deux fenêtres temporelles, éventuellement allouées à d'autres utilisateurs dans une même trame de 4,65 millisecondes. Dans les fenêtres 36 et 37 les fréquences d'échange sont respectivement fi et fj. Ces fréquences fi et fj appartiennent selon le cas à la bande f0 ou à la bande f1.

Pour réaliser l'alternat, le commutateur global comporte un commutateur d'altemat 38, avec deux transistors interrupteurs 39 et 40 (ou équivalent) placés en série aux sorties des commutateurs 4 et 32 respectivement, et reliés en série par les condensateurs 29 et 33 à l'entrée unique du commutateur 25 d'antenne.

Le circuit 23 produit alors un signal ST de commande du commutateur 38 au rythme des fenêtres 36 et 37 pour attaquer les grilles de commande des transistors 39 et 40 du circuit 38. Le circuit 38 est ainsi placé en cascade entre les commutateurs 4 et 32 et le commutateur 25. Selon la valeur du signal temporel ST délivré par le circuit 23, l'un ou l'autre des transistors 39 ou 40 sera rendu passant de manière à relier une voie d'émission, 1 ou 2, ou une voie de réception, 30 ou 31, à un circuit rayonnant 3 ou 7.

Du point de vue de l'invention, les commutateurs 4, 23 et 25 sont équivalents en ce sens que leurs fonctions sont commutatives. Cependant dans tous les cas de commutation on constate qu'on est en présence d'une cascade de trois transistors interrupteurs en série. Par exemple pour le circuit rayonnant 3 et pour la voie d'émission 1, il s'agit des transistors 27, 39 et 20. Pour la voie d'émission 2 il s'agit des transistors 27, 39 et 21. Pour la réception le transistor 39 est remplacé par le transistor 40, et les transistors 20 et 21 par les transistors 34 et 35 respectivement. Dans ces conditions le phénomène de distorsion évoqué ci-dessus a de fortes chances de se produire compte tenu du nombre des transistors qui sont susceptibles d'y donner naissance. Il est cependant réduit avec l'architecture de l'invention où seuls trois interrupteurs sont en série.

On a montré des filtres pour la voie d'émission 1, notamment avec les composants 18, 6, et 5. Par contre dans les voies 30 et 31 de réception il n'est pas besoin de disposer de tels filtres puisqu'étant en réception aucune émission de parasites sur le réseau hertzien n'est à craindre. Tout au plus on placera des condensateurs de découplage en série sur la réception du signal. De même qu'on a prévu l'élément de filtre 5 sur le circuit rayonnant 3, une réalisation semblable peut être prévue sur le circuit 7.

## Revendications

1. Circuit d'émission réception comportant des voies d'émission et des voies de réception, les voies d'émission comprenant une voie (1) d'émission pour une porteuse à une fréquence f0, une voie d'émission (2) pour une porteuse à une fréquence f1 différente de f0, un circuit (3) de rayonnement, et un commutateur (4) pour recevoir ces deux voies d'émission et commuter une de ces deux voies d'émission sur le circuit de rayonnement,
**caractérisé en ce qu'**il comporte un premier élément (5) de filtre situé entre le commutateur et le circuit de rayonnement, ce premier élément de filtre étant accordé avec un deuxième élément de filtre (6) situé dans la voie d'émission à la fréquence f0 pour empêcher la transmission, par cette voie d'émission à la fréquence f0, de composantes fréquentielles à la fréquence f1.

2. Circuit d'émission réception selon la revendication 1, **caractérisé en ce que** :
- les voies de réception comportent une voie de réception (30) accordée à une fréquence f0 et une voir de réception accordée à une fréquence f1, différente d e f0, c es deux voies d e réception étant reliées à deux entrées d'un premier diplexeur (32),
- le commutateur (4) constitue un deuxième diplexeur,
- ledit circuit d'émission et de réception comporte un premier (3) et un deuxième (7) circuit de rayonnement, un commutateur (25) relié en entrée aux sorties des deux diplexeurs et en sortie aux deux circuits de rayonnement, pour recevoir ces deux couples de voies et commuter une voie d'émission et une voie de réception accordées à une même fréquence sur un des circuits de rayonnement.

3. Circuit selon l'une des revendications 1 et 2, **caractérisé en ce que** le premier élément de filtre est accordé avec un troisième (220) élément de filtre situé dans la voie d'émission à la fréquence f1 pour permettre la transmission par cette voie d'émission à la fréquence f1 de composantes fréquentielles à la fréquence f1.

4. Circuit selon l'une des revendications 1 à 3, **caractérisé en ce que** le premier élément est une inductance en parallèle entre une sortie du commutateur et la masse.

5. Circuit selon l'une des revendications 1 à 4, **caractérisé en ce que** la voie d'émission 1 comporte un filtre réjecteur (19) ayant une fréquence de réjection (f'1) comprise entre f0 et f1.

6. Circuit selon la revendication 5, **caractérisé en ce que** la fréquence de réjection est de l'ordre de 1,4 fois f0.

7. Circuit selon l'une des revendications 1 à 6, **caractérisé en ce qu'**il comporte en cascade un couple (4, 32) de commutateurs de mode, un commutateur d'alternat (38), et un commutateur d'antenne (25).

8. Circuit selon l'une des revendications 1 à 7, **caractérisé en ce qu'**il comporte deux circuits rayonnants.

## Claims

1. A transmitting receiving circuit comprising transmitting and receiving paths, the transmitting paths comprising a transmitting path (1) for a carrier at a frequency f0, a transmitting path (2) for a carrier at a frequency f1 that is different from f0, a radiation circuit (3), and a switch (4) for receiving these two transmitting paths and to switch one of these two transmitting paths on the radiation circuit, **characterized in that** the circuit comprises a first filter element (5) situated between the switch and the radiation circuit, this first filter element being tuned with a second filter element (6) situated in the transmitting path at a frequency f0 to prevent the transmission, by this transmitting path at a frequency f0, of frequency components at a frequency f1.

2. The transmitting receiving circuit according to claim 1, **characterized in that**:
- the receiving paths comprise a receiving path (30) tuned to a frequency f0 and a receiving path tuned to a frequency f1, that is different from f0, these two receiving paths being connected to two inputs of a first diplexer (32),
- the switch (4) comprises a second diplexer,
- said transmitting and receiving circuit comprises a first (3) and a second (7) radiation circuit, a switch (25) connected in input to the outputs of the two diplexers and in output to the two radiation circuits, to receive these two path pairs and to switch a transmitting path and a receiving path tuned to the same frequency on one of the radiation circuits.

3. The circuit according to one of claims 1 and 2, **characterized in that** the first filter element is tuned with a third filter element (220) situated in the transmitting path at a frequency f1 to allow the transmission by this transmitting path at a frequency f1 of frequency components at a frequency f1.

4. The circuit according to one of claims 1 to 3, **characterized in that** the first element is an inductor in parallel between an output of the switch and the ground.

5. The circuit according to one of claims 1 to 4, **characterized in that** the transmitting path 1 comprises a rejection filter (19) having a rejection frequency (f1) between f0 and f1.

6. The circuit according to claim 5, **characterized in that** the rejection frequency is on the order of 1.4 times f0.

7. The circuit according to one of claims 1 to 6, **characterized in that** the circuit comprises, in tandem, a pair (4, 32) of mode switches, an alternate switch (38) and an antenna switch (25).

8. The circuit according to one of claims 1 to 7, **characterized in that** the circuit comprises two radiation circuits.

## Patentansprüche

1. Sende-Empfangsschaltkreis, der Sendekanäle und Empfangskanäle umfasst, wobei die Sendekanäle einen Kanal (1) zum Senden einer Trägerwelle mit einer Frequenz f0, einen Sendekanal (2) für eine Trägerwelle mit einer Frequenz f1, die anders ist als f0, einen Strahlungsschaltkreis (3) und einen Umschalter (4) umfassen, um diese zwei Sendekanäle zu empfangen und einen dieser zwei Sendekanäle auf den Strahlungsschaltkreis umzuschalten,
**dadurch gekennzeichnet, dass** er ein erstes Filterelement (5), das zwischen dem Umschalter und dem Strahlungsschaltkreis liegt, umfasst, wobei dieses erste Filterelement auf ein zweites Filterelement (6) abgestimmt ist, das sich in dem Sendekanal mit der Frequenz f0 befindet, um die Übertragung von Frequenzkomponenten mit der Frequenz f1 über diesen Sendekanal mit der Frequenz f0 zu verhindern.

2. Sende-Empfangsschaltkreis nach Anspruch 1, **dadurch gekennzeichnet, dass**:
- die Empfangskanäle einen Empfangskanal (30) umfassen, der auf eine Frequenz f0 abgestimmt ist, und einen Empfangskanal, der auf eine Frequenz f1 abgestimmt ist, die anders ist als f0, wobei diese zwei Empfangskanäle mit zwei Eingängen eines ersten Diplexers (32) verbunden sind,
- der Umschalter (4) einen zweiten Diplexer bildet,
- der Sende- und Empfangsschaltkreis einen ersten (3) und einen zweiten (7) Strahlungsschaltkreis, einen Umschalter (25), der am Eingang mit den Ausgängen der zwei Diplexer und am Ausgang mit den zwei Strahlungsschaltkreisen verbunden ist, umfasst, um diese zwei Paare von Kanälen zu empfangen und einen Sendekanal und einen Empfangskanal, die auf eine gleiche Frequenz abgestimmt sind, auf einen der Strahlungsschaltkreise umzuschalten.

3. Schaltkreis nach einem der Ansprüche 1 und 2, **dadurch gekennzeichnet, dass** das erste Filterelement auf ein drittes Filterelement (220) abgestimmt ist, das sich in dem Sendekanal mit der Frequenz f1 befindet, um das Übertragen von Frequenzkomponenten mit der Frequenz f1 über diesen Sendekanal mit der Frequenz 1 zu erlauben.

4. Schaltkreis gemäß einem der Ansprüche 1 bis 3, **dadurch gekennzeichnet, dass** das erste Element eine Drosselspule ist, die zwischen einem Ausgang des Umschalters und der Masse parallel geschaltet ist.

5. Schaltkreis nach einem der Ansprüche 1 bis 4, **dadurch gekennzeichnet, dass** der Sendekanal 1 ein Rückspeisefilter (19) umfasst, das eine Rückspeisefrequenz (f'1) zwischen f0 und f1 hat.

6. Schaltkreis nach Anspruch 5, **dadurch gekennzeichnet, dass** die Rückspeisefrequenz in der Größenordnung von 1,4 Mal f0 liegt.

7. Schaltkreis nach einem der Ansprüche 1 bis 6, **dadurch gekennzeichnet, dass** er in Kaskade ein Paar (4, 32) von Modusumschaltern, einen Sinplexumschalter (38) und einen Antennenumschalter (25) umfasst.

8. Schaltkreis nach einem der Ansprüche 1 bis 7, **dadurch gekennzeichnet, dass** er zwei Strahlungsschaltkreise umfasst.
